# NEUE EUROPÄISCHE PATENTSCHRIFT

(11) **EP 3 315 799 B2**
(45) Veröffentlichungstag und Bekanntmachung des Hinweises auf die Entscheidung über den Einspruch: **23.02.2022**
(45) Hinweis auf die Patenterteilung: 05.12.2018
(21) Anmeldenummer: 16195729.5
(22) Anmeldetag: 26.10.2016
(51) Int. Cl.: F16B 37/06

(54) **BLINDNIETMUTTER**
BLIND RIVET NUT
ECROU À RIVET AVEUGLE

(43) Veröffentlichungstag der Anmeldung: 02.05.2018
(73) Patentinhaber: GESIPA Blindniettechnik GmbH, 64546 Mörfelden-Walldorf (DE)
(72) Erfinder: Dr. Gärtner, Richard, 64546 Mörfelden-Walldorf (DE); Bamberger, Thomas, 64546 Mörfelden-Walldorf (DE); Setzer, Sandro, 64546 Mörfelden-Walldorf (DE); Schulz, Alexander, 64546 Mörfelden-Walldorf (DE)
(74) Vertreter: Keil & Schaafhausen Patentanwälte PartGmbB

(56) Entgegenhaltungen:
- EP-A1- 0 336 809
- EP-A1- 0 548 044
- EP-A1- 0 756 980
- EP-A1- 1 897 777
- EP-A1- 1 953 398
- EP-A1- 2 792 892
- EP-A2- 0 763 454
- EP-B1- 1 312 526
- EP-B1- 1 834 856
- WO-A1-95/22478
- AT-B- 11 726
- CH-A- 350 679
- CH-A- 447 996
- DE-A1- 19 627 693
- DE-A1-102007 022 713
- DE-A1-102012 219 252
- DE-B- 1 284 168
- FR-A- 737 284
- US-A- 1 879 093
- US-B1- 6 551 039
- "Talgo 22", , 22 November 2011 (2011-11-22), Retrieved from the Internet: URL:http://ferropedia.es/mediawiki/index.p hp/Talgo_22
- "Talgo 22 vorgestellt", Eisenbahn-Revue, vol. 8/9, 2005, page 391,

## Beschreibung

Die Erfindung betrifft eine Blindnietmutter mit den Merkmalen des Oberbegriffs des Anspruchs 1.

Eine derartige Blindnietmutter ist beispielsweise aus US 3 463 046 A bekannt.
Eine weitere Blindnietmutter ist aus CH 447 996 A bekannt. Diese Blindnietmutter dient zum Befestigen eines Ringes in einer Öffnung.

Eine derartige Blindnietmutter wird verwendet, um ein Gewinde in einem Bauteil anzubringen. Einen Blindnietmutter wird insbesondere dann gerne verwendet, wenn es auf andere Weise nicht möglich ist, ein Gewinde in dem Bauteil zu erzeugen, beispielsweise weil das Bauteil eine zu geringe Materialstärke aufweist. Daneben ist es auch möglich, beim Setzen der Blindnietmutter zwei oder mehr Bauelemente miteinander zu verbinden.

Um eine Blindnietmutter zu setzen, wird die Blindnietmutter in eine Bohrung des Bauteils eingeführt, bis der Setzkopf an dem Bauteil anliegt. Ein Gewindedorn wird in das Innengewinde des Gewindeabschnitts eingeschraubt und es wird eine Zugkraft auf den Gewindedorn ausgeübt, so dass sich auf der "Blindseite" des Bauelements der Schließkopf ausbildet. Zum Ausbilden des Schließkopfes verformt sich der Verformungsbereich. Er wölbt sich vom Zugdorn weg nach außen.

Bei manchen Anwendungen derartiger Blindnietmuttern möchte man das Gewicht oder die Masse des Blindniets klein halten. Derartige Anwendungen finden sich beispielsweise im Flugzeug- oder Fahrzeugbau.

EP1 953 398 A1 zeigt eine Blindnietmutter oder -gewindebolzen. Zwischen dem Setzkopf und dem Gewindeabschnitt sind unterschiedlich große Innendurchmesser vorgesehen, so dass sich schrittweise unterschiedliche Wandstärken der Niethülse ergeben.

FR 737 284 A zeigt eine Blindnietmutter mit einem Innengewinde, das in einem pilzförmigen Kopf ausgebildet ist. Die Niethülse weist einen Abschnitt auf, der sich zu dem Kopf hin konusartig verjüngt.

DE 12 84 168 B beschreibt eine weitere Blindnietmutter, die an ihrem Außenumfang polygonartig ausgebildet ist.

Der Erfindung liegt die Aufgabe zugrunde, eine Blindnietmutter mit kleiner Masse bereitzustellen.

Diese Aufgabe wird mit einer Blindnietmutter mit den Merkmalen des Anspruchs 1 gelöst.

Mit einer derartigen Ausgestaltung kann man das Innengewinde und damit auch den Gewindeabschnitt relativ kurz halten, so dass die Masse des Gewindeabschnitts kleingehalten werden kann. Je kleiner die Masse des Gewindeabschnitts ist, desto geringer ist die Masse der Blindnietmutter insgesamt. Es hat sich herausgestellt, dass vier vollständige Gewindegänge für die meisten Befestigungsaufgaben ohne weiteres ausreichen, weil in der Regel ohnehin nur die drei ersten Gewindegänge maßgeblich lasttragend sind. In einer bevorzugten Ausgestaltung ist sogar vorgesehen, dass das Innengewinde maximal drei vollständige Gewindegänge aufweist. Der Setzkopf und der Verformungsbereich können relativ dünn ausgebildet werden, was sich positiv in einer geringen Masse auswirkt. Bei Verwendung von zwei unterschiedliche Wandstärken zwischen dem Setzkopf und dem Gewindeabschnitt kann man eine dünnere Wandstärke verwenden, um die Masse der Blindnietmuttern zu verringern.

Hierbei ist besonders bevorzugt, dass die Vergleichsfestigkeit maximal 50 % höher, insbesondere maximal 25 % höher als die Gewindeauszugskraft ist. Der Setzkopf und/oder der Verformungsbereich können daher außerordentlich dünn sein.

Vorzugsweise weist die Niethülse zumindest im Bereich von Setzkopf und/oder Verformungsbereich ein Material auf, bei dem das Verhältnis zwischen Elastizitätsgrenze und Bruchdehnung mindestens 10 %, vorzugsweise mindestens 12 % beträgt. Die Elastizitätsgrenze, die auch als 0,2-Prozent-Dehngrenze oder mit der Abkürzung R_{p,0,2} bezeichnet wird, ist diejenige mechanische Spannung, bei der die auf die Anfangslänge der Probe bezogene bleibende Dehnung nach Entlastung 0,2 % beträgt. Bei der Verwendung eines Werkstoffes mit dem genannten Verhältnis verwendet man einen höherfesten Werkstoff, bei dem man mit einer geringeren Wandstärke die gleichen mechanischen Eigenschaften wie bei bisher bekannten Blindnietmuttern erreichen kann.

Bevorzugterweise weist das Innengewinde eine Steigung auf, die sich von der Steigung eines Normgewindes um mindestens 2 % unterscheidet. Das Innengewinde weist also einen "Gewindefehler" auf, der dazu führt, dass sich beim Einschrauben einer Schraube oder eines Gewindebolzens eine Verspannung zwischen dem Außengewinde der Schraube oder des Gewindebolzens und dem Innengewinde ergibt. Damit kann man erreichen, dass alle Gewindegänge des Innengewindes in einem hohen Maße lasttragend sind, so dass die Kräfte im Innengewinde gleichmäßiger verteilt sind und der Gewindeabschnitt dementsprechend auf eine geringere maximale Last ausgelegt sein muss.

Hierbei ist bevorzugt, dass die Niethülsen angrenzend an den Setzkopf eine geringere Wandstärke als angrenzend an den Gewindeabschnitt aufweist. Ein Bereich, der an den Setzkopf angrenzt, wird beim Setzen der Blindnietmutter zumindest teilweise in das Fügegut eingesetzt und wird dann vom Fügegut radial nach außen stabilisiert. In diesem Fall kann man eine relativ geringe Wandstärke verwenden, ohne die Fähigkeiten der Blindnietmutter, eine bestimmte Last zu tragen, zu schwächen.

Vorzugsweise weist die Niethülse in einem Abschnitt zwischen dem Setzkopf und dem Gewindeabschnitt eine Außenumfangswand auf, die sich zum Gewindeabschnitt hin verjüngt. Die Querschnittsfläche der Außenumfangswand ist also in der Nachbarschaft des Setzkopfes größer als in der Nachbarschaft des Gewindeabschnitts. Damit kann man erreichen, dass der Gewindeabschnitt eine kleine Masse aufweist, weil der Gewindeabschnitt einen relativ kleineren Außendurchmesser haben kann. Gleichzeitig ist es möglich, mit der Blindnietmutter einen vergleichsweise großen Schließkopf auszubilden, so dass die Flächenpressung zwischen dem Schließkopf und dem Fügegut kleingehalten werden kann, was es wiederum ermöglicht, den Verformungsbereich, der letztendlich zum Ausbilden des Schließkopfes verwendet wird, relativ dünn auszubilden, so dass auch hier wieder eine kleine Masse erhalten wird.

Vorzugweise weist die Niethülse in einem Abschnitt zwischen dem Setzkopf und dem Gewindeabschnitt eine Innenumfangswand auf, die sich zum Gewindeabschnitt hin verjüngt. Hier gilt das Gleiche. Man kann die Außenumfangswand und die Innenumfangswand parallel zueinander verlaufen lassen, so dass sich eine gleichmäßige Wandstärke ergibt.

Es ist allerdings bevorzugt, wenn die Außenumfangswand einen kleineren Winkel mit einer Gewindeachse des Innengewindes einschließt als die Innenumfangswand. In diesem Fall wird die Wanddicke des Abschnitts zum Setzkopf hin kleiner als zum Gewindeabschnitt hin.

Bevorzugterweise weist zumindest ein Abschnitt der Niethülse auf seinem Innen-und/oder Außenumfang eine Form auf, die von einer Zylinder- oder Konusform abweicht. Eine derartige Abweichung kann beispielsweise dadurch gebildet werden, dass die Form des Umfangs durch ein Polygon, eine Wellenform oder mit Rippen gebildet ist. Dadurch wird die Festigkeit des Gewindeabschnitts in radiale Richtung verstärkt, so dass man bei einer ausreichenden Festigkeit nur wenig Material für den Gewindeabschnitt verwenden muss. Bei dem Abschnitt kann es sich um den Verformungsbereich handeln, bei dem die abweichende Form auf dem Innenumfang oder auf dem Außenumfang oder auf dem Innenumfang und dem Außenumfang vorgesehen sein kann. Es kann sich auch um den Gewindeabschnitt handeln, bei dem die abweichende Form zweckmäßigerweise auf dem Außenumfang vorgesehen ist.

Vorzugsweise ist die abweichende Form am Gewindeabschnitt vorgesehen und setzt sich die abweichende Form über den Gewindeabschnitt hinaus in Richtung auf den Setzkopf hin fort. Damit ist es möglich, nicht nur im Gewindeabschnitt Material und damit Masse einzusparen, sondern im Verformungsabschnitt auch.

Vorzugsweise weist die Form Erhebungen und Täler auf, die parallel zur Achse des Innengewindes verlaufen. Dies erleichtert die Herstellung.

Vorzugsweise gehen die Erhebungen mit einer Krümmung vom Gewindeabschnitt in den Verformungsabschnitt über. Damit lassen sich gute Umformeigenschaften beim Ausbilden des Schließkopfes erzielen. Darüber hinaus wird die Fertigung durch Umformen einfach gestaltet.

Die Erfindung wird im Folgenden anhand von bevorzugten Ausführungsbeispielen in Verbindung mit der Zeichnung beschrieben. Hierin zeigen:
- Fig. 1: eine erste Ausgestaltung einer Blindnietmutter, die nicht unter den Anspruch 1 fällt,
- Fig. 2: eine zweite Ausgestaltung einer Blindnietmutter,
- Fig. 3: eine dritte Ausgestaltung einer Blindnietmutter,
- Fig. 4: eine vierte Ausgestaltung einer Blindnietmutter,
- Fig. 5: eine fünfte Ausgestaltung einer Blindnietmutter, und
- Fig. 6: eine sechste Ausgestaltung einer Blindnietmutter.

In allen Figuren sind gleiche und einander entsprechende Elemente mit den gleichen Bezugszeichen versehen. Die Zeichnung ist nicht maßstäblich zu verstehen.

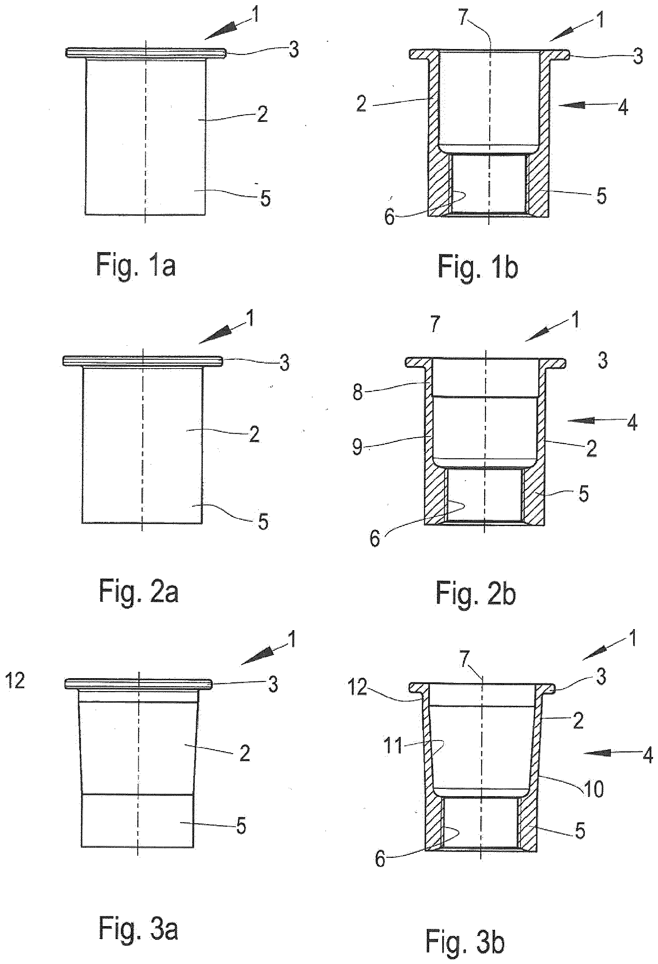

Fig. 1 zeigt in Fig. 1a eine Blindnietmutter 1, die nicht unter den Anspruch 1 fällt, in Seitenansicht und in Fig. 1b in Schnittansicht.

Die Blindnietmutter 1 weist eine Niethülse 2 auf, die einen Setzkopf 3, einen Verformungsbereich 4 und einen Gewindeabschnitt 5 mit einem Innengewinde 6 aufweist. Das Innengewinde 6 weist maximal vier vollständige Gewindegänge auf. Bevorzugterweise weist das Innengewinde 6 sogar maximal drei vollständige Gewindegänge auf.

Beim Setzen einer derartigen Blindnietmutter wird die Niethülse 2 durch eine Bohrung in einem Werkstück oder einem Fügegut geführt, bis der Setzkopf 3 an dem Werkstück oder dem Fügegut anliegt. Ein zuvor in das Innengewinde 6 eingeschraubter Zugdorn wird dann mit einer Zugkraft belastet, so dass der Gewindeabschnitt 5 auf den Setzkopf 3 zubewegt wird. Der Verformungsbereich 4 wölbt sich dadurch radial nach außen und bildet in an sich bekannter Weise einen Schließkopf aus.

Da das Innengewinde 6 maximal vier vollständige Gewindegänge aufweist, kann der Gewindeabschnitt 5 in einer Richtung parallel zu einer Gewindeachse 7 relativ kurz gehalten werden. Der Gewindeabschnitt 5 kann daher mit relativ wenig Material ausgebildet werden, so dass die Masse der Blindnietmutter 1 kleingehalten werden kann.

Die Blindnietmutter 1, zumindest aber der Setzkopf 3 und/oder der Verformungsbereich 4 sind aus einem Material gebildet oder weisen ein Material auf, bei dem das Verhältnis zwischen Elastizitätsgrenze und Bruchdehnung mindestens 10 %, vorzugsweise mindestens 12 % beträgt. Dieses Material bildet also einen höherfesten Werkstoff, der stark belastet werden kann. Bei gleichen Anforderungen an die Belastungen lässt sich Material einsparen, in dem man den Setzkopf 3, die Wand des Verformungsabschnitts 4 oder die Wand des Gewindeabschnitts 5 relativ dünn ausbildet. Damit ergibt sich insgesamt eine Blindnietmutter 1 mit einer geringen Masse.

Fig. 2 zeigt eine abgewandelte zweite Ausgestaltung einer Blindnietmutter 1, die sich von der Ausgestaltung nach Fig. 1 dadurch unterscheidet, dass die Niethülse 2 zwischen dem Setzkopf 3 und dem Gewindeabschnitt 5 mindestens zwei unterschiedliche Wandstärken aufweist. In diesem Ausführungsbeispiel ist dies dadurch realisiert, dass der Verformungsabschnitt 4 in einem dem Setzkopf 3 benachbarten Abschnitt 8 eine geringere Wandstärke aufweist, als in einem dem Gewindeabschnitt benachbarten Abschnitt 9. Der dem Setzkopf 3 benachbarte Abschnitt 8 ist, wenn die Blindnietmutter 1 gesetzt wird, zumindest zum Teil vom Fügegut umgeben, so dass dieser Abschnitt 8 durch das Fügegut stabilisiert wird. Der dem Gewindeabschnitt 5 benachbarte Abschnitt 9 bildet den Schließkopf aus. Im Übrigen kann diese Blindnietmutter 1 die gleichen Eigenschaften und Merkmale wie die im Zusammenhang mit Fig. 1 beschriebene Blindnietmutter aufweisen.

Fig. 3 zeigt eine dritte Ausgestaltung einer Blindnietmutter 1 (Fig. 3a in Seitenansicht, Fig. 3b in Schnittansicht), bei der die Niethülse 2 in einem Abschnitt zwischen dem Setzkopf 3 und dem Gewindeabschnitt 5 eine Außenumfangswand 10 aufweist, die sich zum Gewindeabschnitt 5 hin verjüngt. Bei der Ausgestaltung nach Fig. 3 ist die Außenumfangswand konisch ausgebildet.

Das Innengewinde 6 des Gewindeabschnitts 5 weist den gleichen Durchmesser auf, wie bei den Ausgestaltungen nach den Fig. 1 und 2. Man kann jedoch erkennen, dass die Wand des Gewindeabschnitts 5, die das Innengewinde 6 trägt, aufgrund der sich verjüngenden Form der Niethülse 2 eine geringere Dicke hat als die Wand bei der Ausgestaltung nach den Fig. 1 und 2.

Auch bei dieser Ausgestaltung nach Fig. 3 weist die Niethülse 2 angrenzend an den Setzkopf 3 eine geringere Wandstärke auf als angrenzend an den Gewindeabschnitt 5.

Dies wird im folgenden Ausführungsbeispiel dadurch realisiert, dass die Niethülse 2 zwischen dem Setzkopf 3 und dem Gewindeabschnitt 5 eine Innenumfangswand 11 aufweist, die sich zum Gewindeabschnitt 5 hin verjüngt. Dabei ist ein Winkel zwischen der Innenumfangswand 11 und der Gewindeachse 7 größer als ein Winkel der Außenumfangswand 10 mit der Gewindeachse 7, so dass die Wandstärke der Niethülse 2 sich vom Setzkopf 3 in Richtung auf den Gewindeabschnitt 5 hin kontinuierlich vergrößert.

Man kann unmittelbar an den Setzkopf 3 einen zylindrischen Abschnitt 12 vorsehen, der beim Setzen der Blindnietmutter 1 dann vom Fügegut umgeben ist. Die axiale Länge des zylindrischen Abschnitts 12 richtet sich nach der unteren Grenze des Klemmbereichs der Blindnietmutter 1.

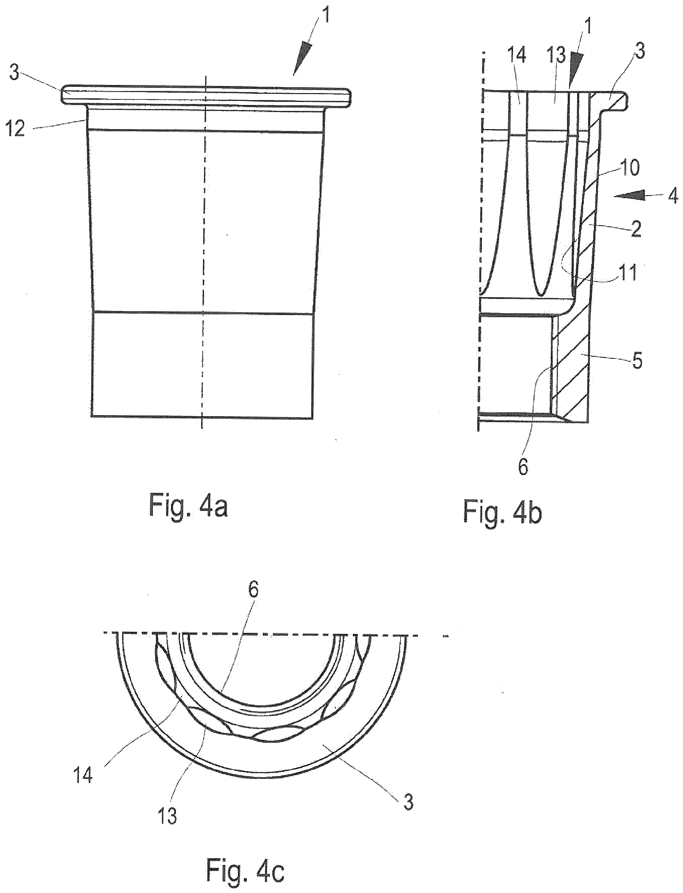

Fig. 4 zeigt eine vierte Ausgestaltung einer Blindnietmutter 1. Diese Blindnietmutter 1 entspricht von außen der in Fig. 3 dargestellten Blindnietmutter. Fig. 4a zeigt eine Seitenansicht, Fig. 4b eine Schnittansicht einer Hälfte und Fig. 4c eine Ansicht von unten. Die Ausgestaltung nach Fig. 4 unterscheidet sich von der Ausgestaltung nach Fig. 3 dadurch, dass die Niethülse 2 an ihrer Innenumfangswand Erhebungen 13 und Täler 14 (oder Vertiefungen) aufweist. Die Erhebungen 13 und Täler 14 wechseln sich in Umfangsrichtung ab. Die Erhebungen 13 und Täler 14 befinden sich etwa auf einer Kreislinie. Die Hauptrichtung der Erhebungen 13 und der Täler 14 verläuft parallel zur Gewindeachse 7.

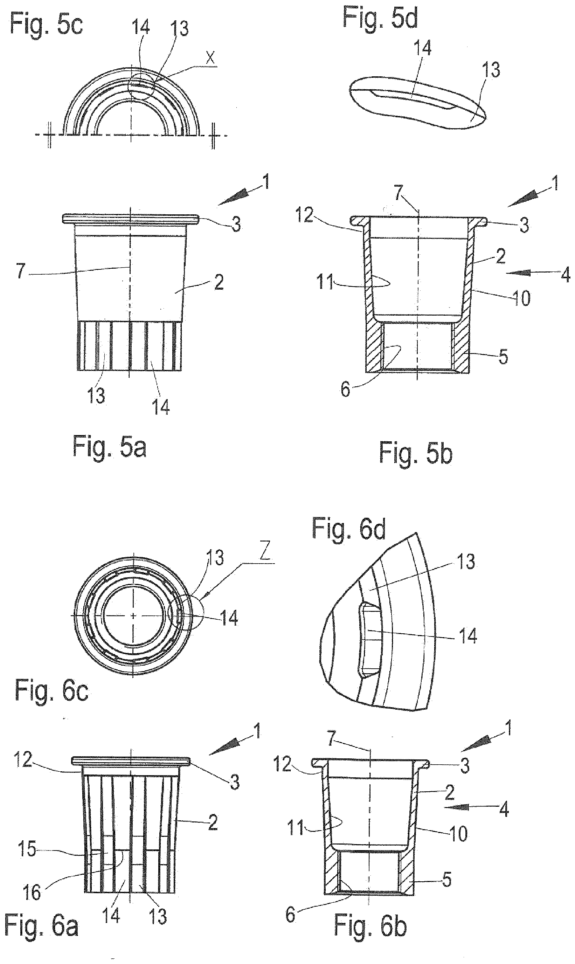

Fig. 5 zeigt eine fünfte Ausgestaltung einer Blindnietmutter 1. Hierin zeigen: Fig. 5a eine Seitenansicht, Fig. 5b eine Schnittansicht, Fig. 5c eine Ansicht von unten und Fig. 5d eine vergrößerte Darstellung der Einzelheit X.

Die Ausgestaltung nach Fig. 5 unterscheidet sich von der Ausgestaltung nach Fig. 3 dadurch, dass der Gewindeabschnitt 5 auf seinem Außenumfang eine Form aufweist, die von einer Zylinder- oder Konusform abweicht.

Im vorliegenden Ausführungsbeispiel weist der Gewindeabschnitt 5 an seinem Außenumfang eine Form auf, bei der sich etwa auf einer Kreislinie Erhebungen 13 und Täler 14 in Umfangsrichtung abwechseln. Die Erhebungen 13 und die Täler 14 verlaufen parallel zur Gewindeachse 7. Dadurch lässt sich die Form des Gewindeabschnitts 5 leicht herstellen.

Die Täler 14 können auch tiefer, als dargestellt, sein.

Für die Herstellung der Form gibt es mehrere Möglichkeiten. Man kann entweder die Täler 14 dadurch herstellen, dass man hier Material entfernt. Das entfernte Material verringert die Masse der Blindnietmutter 1.

Eine alternative Ausgestaltung wird dadurch hergestellt, dass man im Bereich der Täler 14 die Wand des Gewindeabschnitts 5 komprimiert und dadurch verfestigt. Aufgrund der erhöhten Festigkeit kann man die Wandstärke des Gewindeabschnitts 5 im Übrigen weiter verringern.

Fig. 6 zeigt eine sechste Ausgestaltung einer Blindnietmutter 1. Fig. 6a zeigt eine Seitenansicht, Fig. 6b zeigt eine Schnittansicht, Fig. 6c zeigt eine Ansicht von unten und Fig. 6d zeigt eine Einzelheit Z von Fig. 5c in vergrößerter Darstellung.

Bei dieser Ausgestaltung ist die von einer Zylinder- oder Konusform abweichende Form des Gewindeabschnitts 5 auch in den Verformungsbereich 4 fortgesetzt, also in Richtung auf den Setzkopf 3.

Hierbei gehen die Erhebungen 13 mit einer Krümmung 15 vom Gewindeabschnitt 5 in den Verformungsabschnitt 4 über, während die Täler 14 mit einer Kante 16 vom Gewindeabschnitt 5 in den Verformungsabschnitt 4 übergehen.

Die Ausbildung der Erhebungen 13 und Täler 14, die im Zusammenhang mit der Blindnietmutter nach Fig. 5 beschrieben worden ist, kann in gleicher Weise bei der Ausbildung der Blindnietmuttern 1 verwendet werden, die im Zusammenhang mit den Fig. 4 und 6 beschrieben sind.

In allen Ausführungsbeispielen kann vorgesehen sein, dass das Innengewinde 6 einen "Gewindefehler" aufweist. Hierbei weicht die Steigung des Innengewindes um 2 % von der Steigung eines entsprechenden Normgewindes ab. Dies führt dazu, dass sich ein Element mit einem Außengewinde, das in das Innengewinde 6 eingeschraubt wird, gegen das Innengewinde 6 verspannt, so dass die Gewindegänge des Innengewindes 6 in einem hohen Maße gleichmäßig an der Lastaufnahme beteiligt sind. Damit wird die Belastung des Gewindeabschnitts 5 in einer Richtung parallel zur Gewindeachse relativ gleichmäßig und man vermeidet Lastspitzen, für die der Gewindeabschnitt 5 dann dimensioniert sein müsste. Insgesamt lässt sich also der Gewindeabschnitt 5 mit wenig Material und damit relativ schwach dimensionieren, so dass die Masse der Blindnietmutter 1 kleingehalten werden kann.

In allen Ausgestaltungen kann man vorsehen, dass der Setzkopf und/oder der zum Schließkopf umgeformte Verformungsbereich eine Vergleichsfestigkeit aufweist, die größer ist als eine Gewindeauszugskraft des Innengewindes. Diese Vergleichsfestigkeit sollte vorzugsweise maximal 50 % höher, insbesondere maximal 25 % höher als die Gewindeauszugskraft sein. Damit lässt sich wiederum Material einsparen, weil der Setzkopf 3 und/oder der Verformungsbereich 4, der zum Schließkopf ausgebildet werden soll, relativ massearm ausgebildet sein können.

Die Blindnietmutter 1 hat im Grunde zwei Aufgaben: sie soll zum einen zwei oder mehr Elemente eines Fügeguts zusammenhalten. Sie soll außerdem ein Innengewinde zur Verfügung stellen, um später weitere Elemente hier festschrauben zu können. Die Vergleichsfestigkeit und die Gewindeauszugskraft sind nun so aufeinander abgestimmt, dass bei Versagen des Gewindes zumindest die erste Aufgabe, nämlich das Fügen, noch erhalten bleibt.

## Patentansprüche

1. Blindnietmutter (1) mit einer Niethülse (2), die einen Setzkopf (3), einen Verformungsbereich (4) zum Ausbilden eines Schließkopfs und einen Gewindeabschnitt (5) mit einem Innengewinde (6) aufweist, das maximal vier vollständige Gewindegänge aufweist, **dadurch gekennzeichnet, dass** der Setzkopf (3) und/oder der zum Schließkopf umgeformte Verformungsbereich (4) eine Vergleichsfestigkeit aufweist, die größer ist als eine Gewindeauszugskraft des Innengewindes, wobei die Niethülse (2) zwischen dem Setzkopf (3) und dem Gewindeabschnitt (5) mindestens zwei unterschiedliche Wandstärken aufweist.

2. Blindnietmutter nach Anspruch 1, **dadurch gekennzeichnet, dass** die Vergleichsfestigkeit maximal 50% höher, insbesondere maximal 25% höher als die Gewindeauszugskraft ist.

3. Blindnietmutter nach Anspruch 1oder 2, **dadurch gekennzeichnet, dass** die Niethülse (2) zumindest im Bereich von Setzkopf (3) und/oder Verformungsbereich (4) ein Material aufweist, bei dem das Verhältnis zwischen Elastizitätsgrenze und Bruchdehnung mindestens 10 %, vorzugsweise mindestens 12 % beträgt.

4. Blindnietmutter nach einem der Ansprüche 1 bis 3, **dadurch gekennzeichnet, dass** das Innengewinde (6) eine Steigung aufweist, die sich von der Steigung eines Normgewindes um mindestens 2% unterscheidet.

5. Blindnietmutter nach einem der Ansprüche 1 bis 4, **dadurch gekennzeichnet, dass** die Niethülse (2) angrenzend an den Setzkopf (3) eine geringere Wandstärke als angrenzend an den Gewindeabschnitt (5) aufweist.

6. Blindnietmutter nach einem der Ansprüche 1 bis 5, **dadurch gekennzeichnet, dass** die Niethülse (2) in einem Abschnitt zwischen dem Setzkopf (3) und dem Gewindeabschnitt (5) eine Außenumfangswand (10) aufweist, die sich zum Gewindeabschnitt (5) hin verjüngt.

7. Blindnietmutter nach Anspruch 6, **dadurch gekennzeichnet, dass** die Niethülse (2) in einem Abschnitt zwischen dem Setzkopf (3) und dem Gewindeabschnitt (5) eine Innenumfangswand (11) aufweist, die sich zum Gewindeabschnitt (5) hin verjüngt.

8. Blindnietmutter nach Anspruch 7, **dadurch gekennzeichnet, dass** die Außenumfangswand (10) einen kleineren Winkel mit einer Achse (7) des Innengewindes (6) einschließt als die Innenumfangswand (11).

9. Blindnietmutter nach einem der Ansprüche 1 bis 8, **dadurch gekennzeichnet, dass** zumindest ein Abschnitt (4, 5) der Niethülse (2) auf seinem Innen- und/oder Außenumfang eine Form aufweist, die von einer Zylinder- oder Konusform abweicht.

10. Blindnietmutter nach Anspruch 9, **dadurch gekennzeichnet, dass** die abweichende Form am Gewindeabschnitt (5) vorgesehen ist und sich die abweichende Form über den Gewindeabschnitt (5) hinaus in Richtung auf den Setzkopf (3) hin fortsetzt.

11. Blindnietmutter nach Anspruch 9 oder 10, **dadurch gekennzeichnet, dass** die Form Erhebungen (13) und Täler (14) aufweist, die parallel zur Achse (7) des Innengewindes verlaufen.

12. Blindnietmutter nach Anspruch 11, **dadurch gekennzeichnet, dass** die Erhebungen (13) mit einer Krümmung (15) vom Gewindeabschnitt (5) in den Verformungsabschnitt (4) übergehen.

## Claims

1. Blind rivet nut (1) having a rivet sleeve (2) that comprises a set head (3), a deformation region (4) for forming a closing head, and a threaded section (5) having a female thread (6), comprising maximally four complete thread turns, **characterized in that** the set head (3) and/or the deformation region (4) transformed into the closing head have a relative strength that is greater than a thread pull-out force of the female thread, wherein the rivet sleeve (2) has at least two different wall thicknesses between the set head (3) and the threaded section (5).

2. Blind rivet nut according to claim 1, **characterized in that** the relative strength is maximally 50% higher, in particular maximally 25% higher, than the thread pull-out force.

3. Blind rivet nut according to claim 1 or 2, **characterized in that** the rivet sleeve (2) comprises, at least in the region of the set head (3) and/or the deformation region (4), a material for which the ratio between the elastic limit and the elongation at break is at least 10%, preferably at least 12%.

4. Blind rivet nut according to one of claims 1 through 3, **characterized in that** the female thread (6) has a pitch that differs from the pitch of a standard thread by at least 2%.

5. Blind rivet nut according to any of claims 1 to 4, **characterized in that** the rivet sleeve (2) has a smaller wall thickness adjacent to the set head (3) than adjacent to the threaded section (5).

6. Blind rivet nut according to one of claims 1 through 5, **characterized in that** in a section between the set head (3) and the threaded section (5), the rivet sleeve (2) comprises an outer circumferential wall (10) that tapers towards the threaded section (5).

7. Blind rivet nut according to claim 6, **characterized in that** in a section between the set head (3) and the threaded section (5), the rivet sleeve (2) comprises an inner circumferential wall (11) that tapers towards the threaded section (5).

8. Blind rivet nut according to claim 7, **characterized in that** the outer circumferential wall (10) has a smaller angle to an axis (7) of the female thread (6) than does the inner circumferential wall (11).

9. Blind rivet nut according to one of claims 1 through 8, **characterized in that** on its inner and/or outer circumference, at least one section (4, 5) of the rivet sleeve (2) comprises a shape that deviates from a cylinder shape or cone shape.

10. Blind rivet nut according to claim 9, **characterized in that** the deviating shape is provided on the threaded section (5) and the deviating shape continues past the threaded section (5) in the direction of the set head (3).

11. Blind rivet nut according to claim 9 or 10, **characterized in that** the shape comprises protrusions (13) and troughs (14) that run parallel to the axis (7) of the female thread.

12. Blind rivet nut according to claim 11, **characterized in that** the protrusions (13) transition from the threaded section (5) into the deformation section (4) with a curve (15).

## Revendications

1. Ecrou aveugle à sertir (1) avec un manchon de rivet (2), qui comporte une tête de pose (3), une zone de déformation (4) pour constituer une tête de fermeture et une section filetée (5) avec un filetage intérieur (6), qui comporte au maximum quatre filets complets, **caractérisé en ce que** la tête de pose (3) et/ou la zone de déformation (4) déformée en tête de fermeture comporte une résistance de référence, qui est plus grande qu'une force d'arrachage de filetage du filetage intérieur, sachant que le manchon de rivet (2) comporte au moins deux épaisseurs de paroi différentes entre la tête de pose (3) et la section filetée (5).

2. Ecrou aveugle à sertir selon la revendication 1, **caractérisé en ce que** la résistance de référence est au maximum 50 % plus élevée, en particulier au maximum 25 % plus élevée, que la force d'arrachage de filetage.

3. Ecrou aveugle à sertir selon la revendication 1 ou 2, **caractérisé en ce que** le manchon de rivet (2) comporte au moins dans la zone de la tête de pose (3) et/ou la zone de déformation (4) un matériau pour lequel le rapport entre la limite d'élasticité et la rupture à l'allongement est au minimum de 10 %, de préférence au minimum de 12 %.

4. Ecrou aveugle à sertir selon l'une quelconque des revendications 1 à 3, **caractérisé en ce que** le filetage intérieur (6) comporte un pas, qui se différencie du pas d'un filetage normalisé d'au moins 2 %.

5. Ecrou aveugle à sertir selon l'une quelconque des revendications 1 à 4, **caractérisé en ce que** le manchon de rivet (2) comporte adjacente à la tête de pose (3) une épaisseur de paroi plus faible que celle adjacente à la section filetée (5).

6. Ecrou aveugle à sertir selon l'une quelconque des revendications 1 à 5, **caractérisé en ce que** le manchon de rivet (2) comporte dans une section située entre la tête de pose (3) et la section filetée (5), une paroi périphérique extérieure (10), qui s'amincit vers la section filetée (5).

7. Ecrou aveugle à sertir selon la revendication 6, **caractérisé en ce que** le manchon de rivet (2) comporte dans une section située entre la tête de pose (3) et la section filetée (5), une paroi périphérique intérieure (11) qui s'amincit vers la section filetée (5).

8. Ecrou aveugle à sertir selon la revendication 7, **caractérisé en ce que** la paroi périphérique extérieure (10) forme un angle avec un axe (7) du filetage intérieur (6) plus petit que la paroi périphérique intérieure (11).

9. Ecrou aveugle à sertir selon l'une quelconque des revendications 1 à 8, **caractérisé en ce qu'**au moins une section (4, 5) du manchon de rivet (2) comporte sur sa périphérie intérieure et/ou extérieure une forme qui diverge d'une forme cylindrique ou conique.

10. Ecrou aveugle à sertir selon la revendication 9, **caractérisé en ce que** la forme divergente est prévue sur la section filetée (5) et la forme divergente se prolonge au-delà de la section filetée (5) en direction de la tête de pose (3).

11. Ecrou aveugle à sertir selon la revendication 9 ou 10, **caractérisé en ce que** la forme comporte des bossages (13) et des creux (14), qui passent parallèlement à l'axe (7) du filetage intérieur.

12. Ecrou aveugle à sertir selon la revendication 11, **caractérisé en ce que** les bossages (13) passent avec une courbure (15) de la section filetée (5) à la section de déformation (4).
